# EUROPÄISCHE PATENTSCHRIFT

(11) **EP 3 108 185 B1**
(45) Veröffentlichungstag und Bekanntmachung des Hinweises auf die Patenterteilung: **13.10.2021**
(21) Anmeldenummer: 15710438.1
(22) Anmeldetag: 20.02.2015
(51) Int. Cl.: F24S 10/80, F24S 70/14, F24S 80/50

(54) **SOLARKOLLEKTOR ZUM ERWÄRMEN VON GASEN**
SOLAR COLLECTOR FOR HEATING GASES
COLLECTEUR SOLAIRE POUR CHAUFFAGE DE GAZ

(30) Priorität: 20.02.2014 DE 202014100751 U
(43) Veröffentlichungstag der Anmeldung: 28.12.2016
(73) Patentinhaber: Häller, Hans-Jörg, 6252 Dagmersellen (CH)
(72) Erfinder: Häller, Hans-Jörg, 6252 Dagmersellen (CH)
(74) Vertreter: Ernicke, Klaus Stefan
(86) Internationale Anmeldenummer: PCT/EP2015/053558
(87) Internationale Veröffentlichungsnummer: WO 2015/124705

(56) Entgegenhaltungen:
- EP-A1- 2 398 064
- WO-A2-2010/014754
- AU-A1- 2010 202 923
- DE-A1- 10 307 540
- DE-U1- 20 319 065
- DE-U1-202012 005 136
- JP-U- S6 083 891
- US-A- 3 875 925
- US-A- 4 219 011
- US-A1- 2010 206 297
- None

## Beschreibung

In der Praxis ist es bekannt, in Solarkollektoren strömende Luft mit Sonnenenergie zu erwärmen, um damit beispielsweise Luftwärmepumpen zu versorgen oder mit der erwärmten Luft Heizungsanlagen oder Trocknungsanlagen zu betreiben.

Die bekannten Solarkollektoren für die Lufterwärmung bestehen aus starren Materialien und haben eine flache Haupt-Bestrahlungsseite, die zum Äquator hin ausgerichtet werden soll, um den maximalen Flächenwirkungsgrad des einfallenden Sonnenlichts zu nutzen.

Derartige Solarkollektoren sind beispielsweise bekannt aus WO 03/048665 A1, US 2010/0000520 A1, US 2008/0176504 A1, AU 2010 202 923 A1, US 2010/020 6297 A1, WO 2010/014 754 A2 und WO 2010/025 537 A1.

Aus der DE 103 07 540 A1 ist ein solarbetriebener Luftkollektor mit einem Absorber aus einer perforierten Kunststoff-Folie und einer transparenten Abdeckung aus einer Kunststoff-Folie bekannt. Zwischen dem Absorber und der luftundurchlässigen transparenten Kunststoffabdeckung ist eine Absorptionskammer gebildet, die kissenförmig aufgeblasen wird. In der Kammer herrscht also ein Überdruck gegenüber dem Außenraum.

Aus der DE 32 19 951 A1 ist eine aufblasbare Vorrichtung zum Wärmeaustausch zwischen zwei Gasen bekannt. Die Gase werden in einem inneren und einem äußeren Strömungskanal geführt, die voneinander flüssigkeitsdicht und luftdicht getrennt sind und verschiedene Fluide führen können.

US 4,219,011 offenbart einen Solarkollektor mit mehreren übereinander liegenden starren Paneelen oder Scheiben. Eine äußerste transparente Abdeckung ist durch ein primary cover glass gebildet, das mehrere Solarkollektormodule überdecken kann. Diese weisen jeweils als äußerste Modulschicht ein intermediate cover auf, das durch eine transparente Teflonschicht gebildet ist. Die Teflonschicht kann Perforationen enthalten, damit Luft in die darunter liegende Bypassregion eindringen kann. Alternativ kann das intermediate cover durch eine Plastikschicht gebildet sein. Nochmals unterhalb des intermediate cover ist ein collector panel angeordnet, das als Aluminiumblech ausgeführt ist und eine Perforation enthalten kann, um Bypasströmungen in einen noch weiter innen gelegenen Strömungskanal durchzulassen.

US 2010/206297 A1 offenbart einen Solarkollektor mit mehreren Modulen, die jeweils eine äußere starre und plattenförmige Abdeckung und eine innere starre Rückwand aufweisen, zwischen denen eine Kavität gebildet ist. Die äußere Abdeckung kann eine Perforation aufweisen. Innerhalb der Rückwand ist ein Plenum gebildet.

WO 2010/014 754 A2 offenbart einen unverglasten Solarkollektor mit einem einzigen Strömungskanal, der als Plenum bezeichnet wird. Der Solarabsorber ist luftdurchlässig und durch ein gebogenes Blech gebildet. Alternativ kann der Solarabsorber durch eine perforierte Folie gebildet sein. Auf eine zusätzliche Glasabdeckung für den Solarabsorber soll verzichtet werden.

EP 2 398 064 A1 und DE 203 19 065 U1 offenbaren Photovoltaikanlagen mit Tragkonstruktionen für Solarzellen, die einfallende Sonnenstrahlung in elektrische Energie wandeln.

US 3,875,925 offenbart eine heliothermische Vorrichtung, die an einer Hauswand anordenbar ist. Die Vorrichtung umfasst ein schalenförmiges Gehäuse und einen darin angeordneten Schlauch, der eine aufzuheizende Flüssigkeit führt. JP 60-83891 U offenbart eine Trocknungsvorrichtung. Aus AU 2010 202 923 A1 sind verschiedene Ausführungen eines Solar-Lufterhitzers bekannt, die jeweils eine oder mehrere starre Abdeckungen aufweisen. DE 20 2012 005 136 U1 offenbart eine Hocheffizienzdämmung für eine Gebäudefassade.

Es ist Aufgabe der vorliegenden Erfindung, einen effizienten Strahlungskollektor zum Erwärmen eines Gases mit Lichtenergie aufzuzeigen, der kostengünstig herstellbar und einfach zu installieren ist.

Die Erfindung löst diese Aufgabe mit den kennzeichnenden Merkmalen der eigenständigen Ansprüche.

Der Strahlungskollektor gemäß der vorliegenden Offenbarung weist einen inneren Strömungskanal und einen äußeren Strömungskanal auf. Der innere Strömungskanal wird zur Einstrahlungsseite hin durch einen Absorber begrenzt. Der äußere Strömungskanal umgibt den inneren Strömungskanal zumindest teilweise und ist zur Einstrahlungsseite hin durch eine transparente Abdeckung begrenzt. Die transparente Abdeckung wird durch eine flexible und dünnschichtige Materialbahn gebildet, insbesondere durch eine transparente Folie. Die transparente Abdeckung ist tunnelförmig aufgespannt, weist eine Perforation auf und ist derart ausgebildet, dass frische Luft vom Außenbereich her durch die Abdeckung in den äußeren Strömungskanal fließen kann. Der Absorber ist luftdurchlässig und weist eine Perforation auf, wobei der Absorber durch eine flexible und dünnschichtige Materialbahn gebildet ist, insbesondere durch eine Licht absorbierende Folie und/oder ein Gewebe.

Lichtstrahlen können durch die transparente Abdeckung hindurchtreten und auf den Absorber treffen, der die Strahlungsenergie möglichst vollständig absorbiert und in Wärme umwandelt. Das Gas in dem äußeren und in dem inneren Strömungskanal wird durch die von dem Absorber abgegebene Wärme aufgeheizt.

Der Strahlungskollektor gemäß der vorliegenden Offenbarung kann eine für die Aufnahme von Lichtstrahlung vorgesehene Außenfläche in Form eines Halb-Zylinders haben und ist damit besonders für die Absorption von indirekter Lichtstrahlung geeignet. Auf eine spezielle Ausrichtung zum Äquator hin kann somit verzichtet werden, wodurch der Strahlungskollektor in beliebiger Orientierung verwendbar ist. Gerade in Mitteleuropa besteht ein beachtlicher Teil der verfügbaren Lichtleistung aus indirekter Strahlung.

Es werden häufig Strahlungskollektoren mit einem Durchmesser von einem oder mehreren Metern und einer Länge von fünf oder mehr Metern benötigt. Durch die Ausbildung der Abdeckung und/oder des Absorbers durch ein flexibles und dünnschichtiges Material kann ein Solarkollektor mit einer flexiblen Kanalform geschaffen werden, der sich Höhenunterschieden des Untergrunds oder auch Lageveränderungen anpassen kann. Es ist somit nicht erforderlich, eine hohe Lage- oder Winkelgenauigkeit für die einzelnen Teile des Solarkollektors einzuhalten und zwar weder als absolute noch als relative Genauigkeiten. Der Solarkollektor kann somit in einfacher Weise auch bei großen Kollektorlängen und/oder in hügeligem Gelände eingesetzt werden.

Die transparente Abdeckung weist eine Perforation auf, sodass ein Gas, insbesondere Luft, vom Außenbereich her durch die Abdeckung in den äußeren Strömungskanal fließen kann. Zusätzlich weist auch der Absorber eine Perforation auf, sodass ein Gas, insbesondere Luft, von dem äußeren Strömungskanal durch den Absorber hindurch in den inneren Strömungskanal fließen kann. Die im äußeren Strömungskanal vornehmlich im Kontakt mit dem Absorber erwärmte Luft kann durch die Perforation des Absorbers zum inneren Strömungskanal hin eingesaugt und weggeführt werden. Durch die Perforation in der Abdeckung kann auf kurzem Weg frische Luft nachströmen, um im äußeren Strömungskanal erwärmt zu werden.

Der Solarkollektor gemäß der vorliegenden Offenbarung braucht nicht aufgeblasen zu werden (die gewünschte Form des Kollektors wird bevorzugt durch ein Traggestell erzeugt). Da kein Überdruck gehalten werden muss, sind geringere Anforderungen an die äußere Abdichtung erforderlich, wodurch die Herstellungskosten des Gesamtsystems mit Gebläse-Einrichtung und insbesondere die Wartungs- und Instandsetzungskosten erheblich reduziert werden. Ferner ist eine deutlich geringere Energiemenge zum Betrieb des Kollektors erforderlich, sodass sich ein besseres Verhältnis zwischen aufgewendeter Betriebsenergie (zum Ansaugen der Luft) und gesammelter Wärme ergibt.

Der Kollektor gemäß der vorliegenden Offenbarung kann ausschließlich mit einer Saugvorrichtung betrieben werden. Eine zusätzliche Blasvorrichtung zur Erzeugung eines Überdrucks gegenüber der Außenatmosphäre nicht erforderlich. Allerdings können mehrere Kollektoren parallel oder in Reihe geschaltet betrieben werden, wobei insbesondere zwischen den Kollektoren unterstützende Gebläse vorgesehen sein können. Es ist ferner möglich, mehrere Kollektoren aus jeweils einem oder mehreren Modulelementen zu bilden und diese mit angepassten Gebläsemodulen zu verbinden. Der Absorber und/oder die transparente Hülle können dabei über die ein oder mehrere Gebläsemodule hinweg als durchgehende Bahnen gezogen sein. Alternativ können für jeden Abschnitt ein separater Absorber und/oder eine separate transparente Abdeckung vorgesehen sein.

Innerhalb des Kollektors kann ein Druck vorherrschen, der geringer ist als der Außendruck, sodass ständig frische Luft von außen her nachströmen kann. Hierdurch wird eine bessere innere Führung der Luftströme erreicht. Ein ineffizientes Rückblasen von warmer Luft aus dem inneren Strömungskanal in den äußeren Strömungskanal wird weitgehend vermieden. Weiter unten beschriebene Ventile in der transparenten Abdeckung und/oder im Absorber können dazu dienen, die Luftströmungen in die Strömungskanäle und innerhalb bzw. zwischen den Strömungskanälen noch genauer einzustellen, insbesondere zur Erzeugung eines gewünschten Strömungsprofils über der Länge des Kollektors.

Der innere und der äußere Strömungskanal haben bevorzugt eine langgestreckte Form und leiten das erwärmte Gas zu einer Saugvorrichtung. Eine in der Längsachse des inneren Strömungskanals und zu der Saugvorrichtung hin gerichtete Strömung bildet die Haupt-Strömung. Soweit im Folgenden auf die "Strömungsrichtung" Bezug genommen wird, ist die Hauptströmung in Längsrichtung des inneren Strömungskanals und zu der Saugvorrichtung hin gemeint.

Der Strahlungskollektor weist bevorzugt ein Traggestell auf, auf dem der Absorber und die Abdeckung befestigt sind. Das Traggestell kann aus einer Mehrzahl von Modulelementen zusammengesetzt sein, wobei sich die Abdeckung und der Absorber in der Strömungsrichtung über mehrere, insbesondere über alle Teile (Modulelemente) des Traggestells erstrecken können. Da der Absorber und die Abdeckung flexibel sind, muss das Traggestell, insbesondere die Verbindungen zwischen den Modulelementen, nur geringe Genauigkeitsanforderungen erfüllen. Die Modulelemente können insbesondere in einer solchen Weise aneinander anschließen, dass zwischen zwei Modulelementen Höhenunterschiede und/oder relative Verkippungen bestehen können.

Der Strahlungskollektor ist an einer - in Strömungsrichtung gesehen - vorderen Endseite bevorzugt mit einer Saugvorrichtung verbunden. Mit "vorne" wird somit die Seite bezeichnet, zu der die Haupt-Strömung hin gerichtet ist. Über die Saugvorrichtung wird erwärmtes Gas aus dem inneren Strömungskanal abgesogen. Die Saugvorrichtung ist somit für die Ausbildung der Hauptströmung ursächlich. Sie kann bevorzugt durch einen Ventilator gebildet sein. Es können ggfs. zusätzliche Saugvorrichtungen oder Gebläse innerhalb oder am hinteren Ende des Strahlungskollektors vorgesehen sein.

An der Abdeckung und/oder an dem Absorber können jeweils ein oder mehrere Ventile angeordnet sein. Die Ventile in der Abdeckung dienen bevorzugt zur Beschränkung einer Gasströmung zwischen dem Außenraum und dem äußeren Strömungskanal. Die Ventile im Absorber dienen bevorzugt zur Beschränkung einer Gasströmung zwischen dem äußeren Strömungskanal und dem inneren Strömungskanal. Durch die Erwärmung der Luft innerhalb des Solarkollektors, insbesondere innerhalb des äußeren Strömungskanals, kommt es zu lokalen Ausdehnung bzw. Druckerhöhungen. Die Temperatur (und die Enthalpie) der Luft innerhalb des Kollektors und der lokale Druck werden tendenziell in der Strömungsrichtung zunehmen. Andererseits führt die Saugvorrichtung zur Bildung eines Unterdrucks am vorderen Ende. Die Ventile in der transparenten Abdeckung und/oder in dem Absorber können über der Länge des Solarkollektors unterschiedliche Drosselwirkungen aufweisen, um ein gewünschtes Strömungsprofil im inneren und äußeren Strömungskanal zu erzeugen. Es kann insbesondere sinnvoll sein, die lokalen Drosselwirkungen im Absorber und in der transparenten Abdeckung separat und nach unterschiedlichen Kriterien zu wählen.

In den Unteransprüchen sind weitere vorteilhafte Ausbildungen der Erfindung aufgezeigt.

Die Erfindung ist in den Zeichnungen beispielsweise und schematisch dargestellt. Es zeigen:
- Figur 1:: einen Strahlungskollektor in perspektivischer Ansicht;
- Figur 2:: einen Strahlungskollektor in Seitenansicht;
- Figur 3:: einen bevorzugten Aufbau der Stützkonstruktion eines Strahlungskollektors;
- Figur 4:: eine alternative Ausführungsform für einen Tragbogen zur Verwendung bei Schneelast;
- Figur 5:: eine schematische Schnittdarstellung zur Erläuterung der Funktion von Ventilen in einer Abdeckung oder einem Absorber bei Auftreten von Seitenwind;
- Figur 6:: eine bevorzugte Ausführung eines aus zwei Folienlagen gebildeten Ventils zur Integration in die Abdeckung oder den Absorber;
- Figur 7:: zwei einander gegenübergestellte Ventilformen zur Verdeutlichung der Beeinflussbarkeit der Drosselwirkung eines Ventils;
- Figuren 8 - 10:: Alternative Ausführungsformen für ein Ventil;
- Figuren 11 u 12:: Eine bevorzugte Ausführungsform eines Traggestells;
- Figuren 13A u B:: Eine bevorzugte Ausführung von Modulelementen mit separaten Bodenfolien.

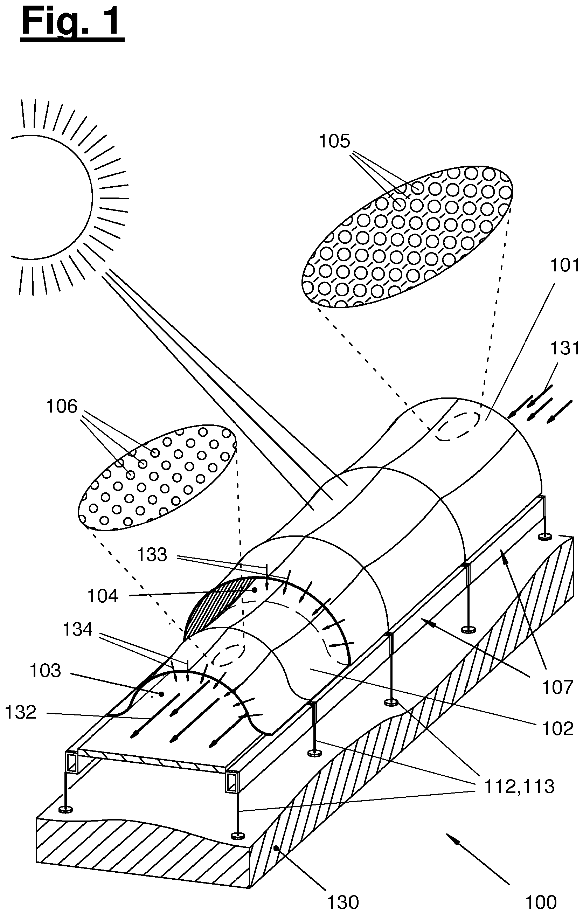

Figuren 1 bis 3 zeigen eine bevorzugte Ausführungsform eines Strahlungskollektors (100) im Schrägbild, in Seitenansicht und im Querschnitt.

Der Strahlungskollektor (100) dient zum Erwärmen eines hindurchfließenden Gases mit Lichtenergie. Er ist bevorzugt als Solarkollektor zum Erwärmen von Luft ausgebildet und kann mit einer Heizanlage und/oder einer Trocknungsanlage verbunden sein, um für diese einen Luft-Speisestrom mit erhöhter Wärme bereitzustellen. Der erwärmte Luftstrom kann zur direkten Beheizung oder zur Versorgung einer Luftwärmepumpe oder für sonstige geeignete Zwecke verwendet werden, wie beispielsweise das Trocknen von biogenen Gütern wie Getreide, Holz-Hackschnitzeln, Sägemehl, Früchten oder zur Gewinnung von Meersalz oder von Salz aus Sole.

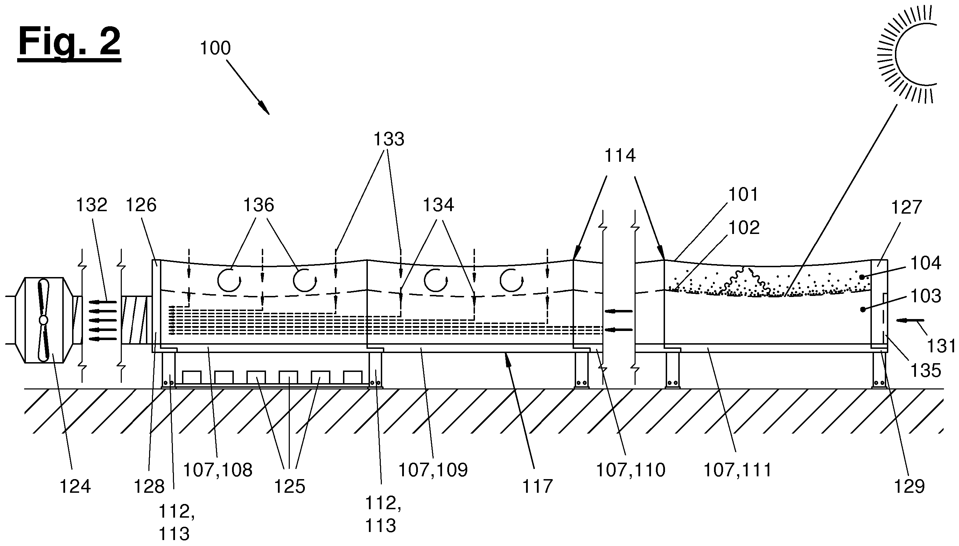

Der Strahlungskollektor (100) weist einen inneren Strömungskanal (103) auf, in dem das erwärmte Gas geführt und zur vorderen Endseite (126) hin gespeist wird (vgl. Figur 2). Die an der vorderen Endseite (126) aus dem Strahlungskollektor (100) austretende Luft (Auslass-Strömung) (132) hat einen Volumenstrom (gefördertes Volumen pro Zeiteinheit [cm³ pro s]), der über der Länge des Strahlungskollektors (100), d.h. in der Hauptströmung allmählich anwächst. Der über der Länge auftretende Volumenzuwachs ergibt sich einerseits aus der steigenden lokalen Temperatur des Gases, die zu einer Volumenausdehnung führt, und andererseits aus dem Zuströmen (133) von Gas durch den Absorber (102) bzw. durch die äußere transparente Abdeckung (101).

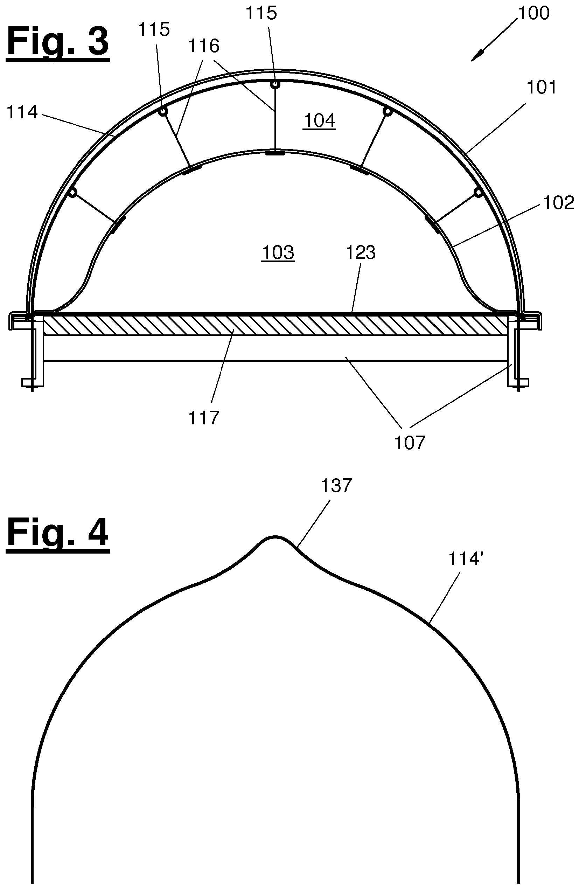

Wie in Figuren 1 und 3 dargestellt ist, besteht die Abdeckung (101) aus einem flexiblen und dünnschichtigen Material, das zur Bildung des äußeren Strömungskanals (104) tunnelförmig aufgespannt wird. Der Solarkollektor (100) weist bevorzugt ein Traggestell (107) auf, an dem eine Mehrzahl von Tragbögen (114) angeordnet sind. Ein Tragbogen (114) kann, wie beispielsweise in Figur 3 dargestellt, durch einen im Halbkreis gebogenen Stab ein gebogenes Rohr oder eine Profilstange gebildet sein. Alternativ sind andere vergleichbare Bauformen möglich. Der Trägerbogen besteht bevorzugt aus einem korrosionsbeständigen Material, beispielsweise aus Aluminium, einem verzinkten oder lackierten Stahl oder aus einem Kohlefaserstab.

Die Abdeckung kann beispielsweise durch eine ein- oder mehrlagige Folie gebildet sein, insbesondere eine UVbeständige Polyethylenfolie. Die Abdeckung (101) ist bevorzugt außenseitig auf die Tragbögen (114) aufgelegt. Sie kann randseitig mit dem Traggestell (107) verbunden und/oder mit Gewichten fixiert sein. Alternativ sind beliebige andere Formen der Befestigung möglich.

Der Absorber (102) kann ebenfalls aus einer ein- oder mehrlagigen Folie und/oder einem mehrlagigen Gewebe bestehen. Bevorzugt umfasst der Absorber einen Materialanteil aus Ethylen-Propylen-Dien-Kautschuk (EPDM). Der Absorber (102) dient zur Absorption der Sonnenstrahlung. Sein Verhalten sollte zur Erreichung einer maximalen Absorption möglichst dem idealen schwarzen Körper entsprechen. Ein solcher absorbiert vollständig die auftreffende Lichtenergie, hat allerdings auch eine hohe Wärmeabstrahlungsleistung. Der Absorber kann bevorzugt eine selektive Beschichtung aufweisen, durch die Wärmeabstrahlung verringert, insbesondere auf länger-wellige Wärmestrahlung beschränkt wird. Hierdurch können Wärmeabstrahlungsverluste verringert werden, während die Absorptionsrate im Wesentlichen gleich bleibt, sodass der Wirkungsgrad der Energiewandlung von Lichtenergie in innere Wärme des Gases optimiert wird. Die selektive Beschichtung kann eine beliebige Zusammensetzung haben. Es kommt beispielweise eine Chrom-Beschichtung in Betracht, insbesondere eine Schwarz-Chrom Beschichtung. Alternativ kann eine Schwarz-Nickel Beschichtung, eine sog. Black crystal Beschichtung oder eine Titanoxinitrit Beschichtung verwendet werden. Auch keramische Beschichtungen sind möglich.

Der Absorber (102) kann bevorzugt ebenfalls durch die Tragbögen (114) gestützt, insbesondere mittels Abhängern (116) befestigt sein. Ein Abhänger (116) kann beispielsweise ein Zugmittel sein, dessen eine Seite an dem Tragbogen (114), insbesondere an einer dort angeordneten Öse (115) eingehängt ist, wobei das andere Ende mit einer entsprechend angepassten Aufnahme an der Materialbahn des Absorbers (102) verbunden ist (vgl. Figur 3). Der Absorber (102) kann ebenfalls randseitig an dem Traggestell (107) fixiert und/oder mit Gewichten befestigt sein.

Alternativ können für die Befestigung und das Aufspannen des Absorbers (102) ein oder mehrere separate Tragbögen (nicht dargestellt) oder sonstige geeignete Befestigungsmittel vorgesehen sein. Separate Tragbögen für die transparente Abdeckung (101) und den Absorber (102) erleichtern beispielsweise eine vertikale Anbringung des Solarkollektors oder mit Schrägstellung des Traggerüsts gegenüber der Horizontalen, also beispielweise eine Installation an einer Hauswand oder auf einem Schrägdach.

An dem Traggestell (107) sind bevorzugt ein oder mehrere thermische Isolierungen (117), insbesondere Isolierplatten, angeordnet, die den inneren Strömungskanal (103) zu der von der Einstrahlung weg weisenden Seite hin begrenzen. Eine thermische Isolierung (117) dient dazu, Wärmeleitungs- und Wärmestrahlungsverluste aus dem inneren Strömungskanal (103) zum Außenraum hin zu verringern. Die Isolierung (117) kann bevorzugt auf dem Traggestell (107) aufliegen und ggf. mit diesem fest verbunden sein.

Der innere Strömungskanal (103) kann ggf. an der von der Einstrahlung abgewandten Seite zusätzlich durch eine flexible und dünnschichtige Materialbahn, insbesondere eine Bodenfolie (123), begrenzt sein. Diese kann auf dem Traggestell (107) und insbesondere auf der thermischen Isolierung (117) aufliegen.

Gemäß einer bevorzugten Ausführungsform können die Materialbahn(en) des Absorbers (102) und die Materialbahn der Bodenfolie (123) zur Bildung eines Schlauches verbunden, insbesondere randseitig verschweißt, vernäht oder verklebt sein, um einen vorgefertigten Absorber-Schlauch zu bilden. Die Installation eines Strahlungskollektors (100) kann mit einem Absorber-Schlauch besonders einfach und schnell erfolgen, wie nachfolgend für das in Figur 1 gezeigte Ausführungsbeispiel erläutert wird.

Der Absorber-Schlauch kann bei der Installation des Strahlungskollektors (100) auf einem vorinstallierten Traggestell (107) ausgerollt werden. Anschließend können die Tragbögen (114) an dem Traggestell (107) befestigt werden. Mittels der vorgenannten Abhänger (116) kann der Absorber (102) an den Tragbögen (114) fixiert werden, wobei der Absorber-Schlauch geöffnet und der innere Strömungskanal (103) gebildet werden. Abschließend kann die Abdeckung (101) auf die Tragbögen (114) aufgelegt werden, wobei der äußere Strömungskanal (104) zwischen dem Absorber (102) und der Abdeckung (101) gebildet wird.

Gemäß einer bevorzugten Ausführungsform können die Enden der Tragbögen (114) in randseitige Aufnahmen, insbesondere in randseitige Aufnahmeöffnungen in dem Absorber (102) und/oder in der Bodenfolie (123), bzw. in dem Absorber-Schlauch eingesteckt werden, sodass bei der Installation der Tragbögen (114) gleichzeitig eine randseitige Fixierung des Absorbers (102) erfolgt. Alternativ oder zusätzlich können der Absorber (102) und/oder die Bodenfolie (123), bzw. der Absorber-Schlauch durch separate Befestigungsmittel mit dem Traggestell (107) verbunden oder freihängend fixiert werden.

Gemäß einer weiteren bevorzugten Ausführungsform werden der Absorber (102) und die transparente Abdeckung (101) an separaten Tragbögen (114) befestigt. Die Bodenfolie (123), der Absorber (102) und die Abdeckung (101) können als separate Folien auf das Traggerüst bzw. die Tragbögen aufgelegt werden. Im Anschluss können die in der Strömungsrichtung verlaufenden Ränder der Folien (101, 102, 123) gemeinsam mit einem Schnellverschluss-System am Traggestell befestigt werden. Ein solches Schnellverschluss-System kann insbesondere die Folien dichtend gegeneinander pressen. Die Folien sind dann separat auswechselbar. In Endsprechender Weise können die Folien an den Enden des Solarkollektors mit Schnellverschluss-Systemen befestigt sein.

Die Querschnittsform und Größe des Solarkollektors (100) kann je nach Einsatzbedingungen und dem zu erzeugenden Volumenstrom angepasst werden. In Figur 4 ist beispielhaft ein Tragbogen (114') dargestellt, mit dem eine auf Schneelast optimierte Außenkontur des Strahlungskollektors (100) vorgegeben werden kann. Dieser Tragbogen (114') hat eine im Wesentlichen kreisförmige oder elliptische Grundform, wobei an dem in vertikaler Richtung höchsten Punkt des Tragbogens (114') eine zusätzliche Giebelkrümmung (137) vorgesehen ist. Durch die Giebelkrümmung (137) wird erreicht, dass die Außenkontur des Solarkollektors (100) nur eine sehr schmale horizontal ausgerichtete Giebelfläche aufweist, an die sich randseitig Bereiche mit einem stärkeren Gefälle anschließen. Hierdurch wird ein schnelles Abgleiten von Schnee- oder Eisablagerungen unterstützt. Zwischen den Giebelpunkten von zwei benachbarten Tragbögen (114') können Seile oder Gurte gespannt sein, auf denen die äußere Abdeckung (101) stützend aufliegt, sodass eine unerwünschte Ausbildung von im Wesentlichen horizontal ausgerichteten Sicken zwischen den Bögen (114') ebenfalls vermieden wird. In solchen Sicken könnte sich sonst womöglich Schnee oder Eis ansammeln.

Figuren 1 und 2 erläutern die Vorgänge der Gaserwärmung und des Gastransports in dem Strahlungskollektor (100). Eine als Sonne dargestellte Lichtquelle emittiert Lichtstrahlen, die auf den Strahlungskollektor (100) treffen. Diese Strahlen können durch die transparente Abdeckung (101) möglichst ungehindert hindurchtreten und treffen auf den innenseitig angeordneten Absorber (102). Dort wird die Strahlungsenergie möglichst vollständig absorbiert und in Wärme umgewandelt. Im rechten Teil von Figur 2 ist die Wärmeübertragung vom Absorber (102) auf das Gas in dem äußeren Strömungskanal (104) durch eine Vielzahl von kleinen Punkten illustriert. Die Wärmeübertragung findet überwiegend durch Konvektion statt. Demzufolge werden die nahe an dem Absorber (102) liegenden Luftschichten stärker erwärmt, als die entfernten Schichten. Etwaig von dem Absorber (102) abgegebene Wärmestrahlung wird bevorzugt von der transparenten Abdeckung (101) innenseitig reflektiert und wieder zum Absorber (102) hin zurückgestrahlt (im rechten Teil von Figur 2 durch Wellenpfeile dargestellt).

Wie in Figur 1 dargestellt sind sowohl die Abdeckung (101) als auch der Absorber (102)luftdurchlässig, d.h. sie weisen eine jeweilige Perforation (106, 105) auf. Die Perforation kann bevorzugt durch eine regelmäßige oder gezielt vorgegebene unregelmäßige Anordnung von Öffnungen gebildet sein, insbesondere in Form von gestanzten oder geschnittenen Löchern. Alternativ oder zusätzlich können die Öffnungen einer Perforation (105, 106) eine langgestreckte Form haben und/oder durch einfache Schlitze oder Schnitte gebildet sein.

Die Perforation (105) in der Abdeckung (101) und die Perforation (106) im Absorber (102) können unterschiedlich ausgebildet sein, insbesondere unterschiedliche Lochabstände und Lochdurchmesser aufweisen. Die Perforation (105) im Absorber (102) dient dazu, die Luft, die in den foliennahen Schichten am stärksten erwärmt wird, in den inneren Strömungskanal abzusaugen.

Die Perforation (105) in der Abdeckung (101) dient dazu, Luft aus dem Außenbereich des Strahlungskollektors (100) in den äußeren Strömungskanal (104) nachfließen zu lassen. Die Abdeckung (101) kann ferner dazu dienen, bereits erwärmte Luft davor zu schützen, dass sie durch Wind weggeblasen wird.

Wie aus den Strömungsdarstellungen in Figur 2 ersichtlich ist, steigt der Volumenstrom im inneren Strömungskanal (103) vom rückseitigen Ende (127) bis zum vorderseitigen Ende (126) an. Der lokale Anstieg des Volumenstroms ist einerseits auf das Zuströmen von Luftanteilen durch die Gasströmungen (134) und andererseits durch die Gasexpansion in Folge der Erwärmung zurückzuführen.

Die Perforationen (106,105) im Absorber (102) und ggfs. in der Abdeckung (101) werden bevorzugt so gewählt, dass über die gesamte Länge des Strahlungskollektors (100) eine Absaugung der erwärmten Luft in den inneren Strömungskanal (103) stattfinden kann. Hierfür ist es erforderlich, dass über die gesamte Länge ein lokaler, nach innen gerichteter Druckgradient zwischen dem inneren Strömungskanal (103) und dem äußeren Strömungskanal (104) besteht. Es sollte also verhindert werden, dass die Saugleistung der Saugvorrichtung (124) bereits in den vorderen Bereichen des Strahlungskollektors (100) durch die dortigen Zuströme (134) gesättigt bzw. verbraucht ist.

Der Absorber (102) und insbesondere dessen Perforation (105) sind also bevorzugt derart ausgebildet, dass über der Gesamtoberfläche des Absorbers (102) eine Drosselung der lokalen Gasströmungen (134) (Absorber-Durchtrittströme) in einem solchen Maße erfolgt, dass sich das von der Saugvorrichtung (124) erzeugte Druckgefälle auch noch am rückseitigen Ende (127) auswirkt. Die Drosselwirkung kann dabei bevorzugt über der Länge des Strahlungskollektors (100) lokal unterschiedlich sein. Es kann insbesondere am in Strömungsrichtung vorderen Ende (126) (nahe an der Saugvorrichtung (124)) eine höhere Drosselwirkung vorgesehen sein, als am rückseitigen Ende (127).

Eine lokale Anpassung der Drosselwirkung kann bevorzugt durch die Wahl der Lochdurchmesser und Lochabstände für die Perforation (105) erfolgen. Durch im Durchmesser kleine und/oder mit größerem Abstand zueinander gesetzte Perforationsöffnungen (105, 106) wird eine höhere Drosselwirkung erzeugt, als durch im Durchmesser große und/oder nah beieinander liegende Löcher.

Die Drosselwirkung kann alternativ oder zusätzlich durch weitere technische Maßnahmen beeinflusst werden, insbesondere durch Ventile in der transparenten Abdeckung (101) und/oder im Absorber (102), auf die weiter unten eingegangen wird.

Bei dem in Figur 2 dargestellten Ausführungsbeispiel weist der Strahlungskollektor (100) eine Vorderwand (126) und eine Rückwand (127) auf, die durch flache Abschlussplatten, beispielsweise Abschlussbleche gebildet sind. In der Vorderwand (126) ist eine großformatige Öffnung gebildet, die an einen Kanal anschließt. Das erwärmte Gas wird durch die Öffnung und den Kanal zur Saugvorrichtung (124) geleitet. Im Kanal liegt die Auslass-Strömung (132) mit dem maximalen Volumenstrom vor.

In der Rückwand (127) kann ebenfalls eine Öffnung (135) vorgesehen sein, durch die eine Einlass-Strömung (131) an Luft von der Außenseite her in den inneren Strömungskanal (103) eindringen kann. Eine solche Öffnung kann beispielsweise durch eine Klappe oder ein Lappenventil oder in sonstiger geeigneter Weise gebildet sein. Die rückseitige Öffnung oder Klappe (135) kann eine Überdruckventilwirkung haben, sodass eine endseitige Einlass-Strömung (131) oder auch ein endseitiges Ausströmen von überschüssigem Gas aus dem inneren Strömungskanal (103) ermöglicht wird, wenn ein Druckgradient zwischen dem inneren Strömungskanal (103) und dem Außenbereich an der Rückwand (127) einen Schwellenwert überschreitet. Ein solcher Schwellenwert kann für das Einströmen und das Ausströmen von Gas unterschiedlich festgelegt sein. Zu einem Überdruck könnte es beispielsweise kommen, wenn die Saugvorrichtung bei starker Sonneneinstrahlung ausfällt oder deaktiviert ist und der Absorber oder die transparente Abdeckung über die unten erläuterten Ventile verfügen.

Figur 2 zeigt eine bevorzugte Ausführung eines Traggestells (107), das durch eine Mehrzahl von hintereinander angeordneten Modulelementen (108, 109, 110, 111) gebildet ist. Eine derartige Ausbildung bringt den Vorteil, dass das Traggestell aus Gleichteilen und somit kostengünstig herstellbar ist. Die einzelnen Modulelemente können vor der Installation platzsparend gelagert und transportiert werden, was einen zusätzlichen Kostenvorteil bringt. Ferner können einzelne Module separat ausgetauscht werden.

Das Traggerüst (107) gemäß Figur 2 weist ein Startelement (128) auf, an dem das erste Modulelement (108) angesetzt wird. An dem Startelement (128) kann ferner die Frontwand (126) angeordnet sein. Es kann über ein Paar von Standfüßen (112) verfügen. Jedes Modulelement (108, 109, 110, 111) kann an einem Startelement (128) oder einem vorhergehenden Modulelement angesetzt und befestigt werden. Es ist somit lediglich erforderlich, dass ein Modulelement (108, 109, 110, 111) ein einzelnes weiteres Paar an Standfüßen (112) aufweist, das entweder an einer Verbindungsseite zu einem in Strömungsrichtung nachfolgenden oder einem in Strömungsrichtung vorhergehenden Modulelement angeordnet ist.

Bei dem in Figur 2 dargestellten Ausführungsbeispiel ist an dem letzten Modulelement (111) ein Abschlusselement (129) befestigt, welches bevorzugt die Rückwand (127) umfasst.

Durch die vorgenannte Modulbauweise können Strahlungskollektoren von beliebiger Länge ohne bzw. mit nur geringem Anpassungsaufwand der Bestandteile gefertigt werden.

Das Traggestell (107) und insbesondere die Modulelemente (108, 109, 110, 111) weisen bevorzugt Standfüße (112) mit einer Höhenverstellung (113) auf. Die Standfüße können alternativ oder zusätzlich zur Höhenverstellung in der Längsrichtung des Kollektors individuell positionierbar sein. Durch die Höhenverstellung kann eine Anpassung an einen unebenen Untergrund erfolgen, was beispielhaft in Figur 1 dargestellt ist. Die Höhenanpassung kann bei der Installation für jedes Modulelement (108, 109, 110, 111) separat, d.h. individuell erfolgen. Wie oben ausgeführt wurde, können sich die Abdeckung (101), der Absorber (102) und ggf. eine Bodenfolie (123) flexibel anpassen. Somit muss durch die Höhenverstellung (113) an den Standfüßen (112) keine Feinjustierung erreicht werden. Es ist ausreichend, die Füße so einzustellen, dass ein Stand eines einzelnen Modulelements (108,109,110,111) gewährleistet ist. Auf eine fluchtende und/oder verkippungsfreie Ausrichtung der Teile des Traggestells (107) bzw. des Strahlungskollektors (100) insgesamt kann hingegen verzichtet werden. Hierdurch kann die Installation des Solarkollektors (100) besonders schnell und ohne vorherige Schaffung eines Fundaments erfolgen.

Ein Strahlungskollektor (100) kann gemäß einer bevorzugten Ausführungsform ein oder mehrere Ventile (118) aufweisen, die an der Abdeckung (101) und/oder an dem Absorber (102) angeordnet sind. Die Ventile (118) können zur volumenmäßigen oder richtungsmäßigen Beschränkung einer Gasströmung (133, 134) durch eine Perforation (105, 106) dienen.

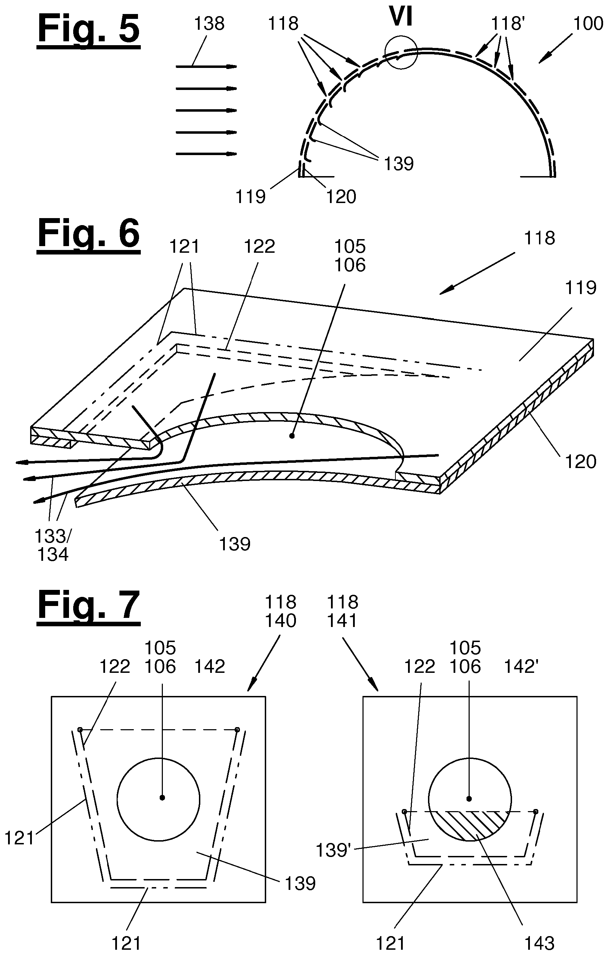

Figur 5 zeigt beispielhaft einen Strahlungskollektor (100) unter einer Windlast (138). Der Strahlungskollektor (100) weist eine zum Wind hin gerichtete Seite (Luv) und eine vom Wind abgewandte Seite (Lee) auf. Durch den Seitenwind (138) wird ein Druckgradient zwischen der Luv- und der Lee-Seite erzeugt. Folglich könnte durch den Seitenwind (138) eine bereits innerhalb des Strahlungskollektors (100) erwärmte Luft wieder aus dem Kollektor (100) herausgeblasen werden. Die Ventile (118, 118') können dazu dienen, ein solches Herausblasen zu verhindern, in dem sie eine Gasströmung (133, 134) durch die Perforation (105, 106) in der Abdeckung (101) und/oder in dem Absorber (102) nur nach innen hin ermöglichen. Entsprechend kann ein Ventil (118, 118') schließen, wenn der Außendruck niedriger ist als der Innendruck. Dies ist in Figur 5 beispielhaft für die Ventile (118') auf der Lee-Seite dargestellt. Die Ventile können hingegen öffnen, wenn der Außendruck höher ist als der Innendruck, was in Figur 5 für die Ventile (118) auf der Luv-Seite dargestellt ist.

Die Ventile (118, 118') können beliebig ausgebildet sein. Sie können insbesondere durch das flexible und dünnschichtige Material der Abdeckung (101) oder des Absorbers (102), einerseits, und durch eine zusätzliche Ventilbildungsfolie oder ein zusätzliches ventilbildendes Bauteil, andererseits, gebildet sein. Alternativ können vorgefertigte Ventile innen- oder außenseitig zur Überdeckung einer oder mehrerer Öffnungen einer Performation (105, 106) auf der Abdeckung (101) oder dem Absorber (102) befestigt sein.

Figuren 6 und 7 zeigen eine erste bevorzugte Konstruktionsform für ein Folienventil. Hier ist die äußere Lage (119) das flexible und dünnschichtige Material der Abdeckung (101) oder des Absorbers (102). Die innere Lage (120) wird durch eine zusätzliche flexible und dünnschichtige Materialbahn, insbesondere eine separate Ventilfolie, gebildet, die mit der Abdeckung (101) oder dem Absorber (102) verbunden ist.

In der äußeren Lage (119) sind die Öffnungen der Perforation (105, 106) angeordnet, durch die eine Gasströmung (133, 134) auftreten kann. Durch die innere Lage (120) (Ventilfolie) können Ventillappen (139) gebildet werden, die ein oder mehrere Öffnungen der Perforation (105,106) überdecken können. Wenn sich ein Ventillappen (139) an die äußere Lage (119) anlegt, werden die Öffnungen der Perforation (105, 106) verdeckt und somit wird eine Gasströmung (133, 134) blockiert. Wenn der Ventillappen (139) nach Innen hin von der äußeren Lage (119) abgehoben wird, kann eine Gasströmung (133, 134) durch die ein oder mehreren Öffnungen der Perforation (105, 106) stattfinden.

Die innere Lage (120) kann eine grundsätzlich geschlossene dünnschichtige Folienbahn sein, die vollflächig mit der äußeren Lage (119) in Verbindung steht und bevorzugt im Bereich von einer oder mehreren Verbindungsstellen (121) mit dieser verbunden ist. Die Verbindung kann insbesondere durch Schweißnähte oder Verklebungen erfolgen. Die ein oder mehreren Ventillappen (139) können durch Trennstellen (122), insbesondere Schnitte, in der Ventilfolie erzeugt sein.

Ein solches Folienventil kann neben der Beschränkung der Durchflussrichtung auch eine Drosselwirkung erzeugen. Das heißt, das Ventil (118) kann den Volumenstrom einer Gasströmung (133, 134), die durch eine oder mehrere Öffnungen der Performation (105, 106) gerichtet ist, volumenmäßig drosseln. Die Drosselung kann insbesondere durch die Beeinflussung des effektiven Strömungsquerschnitts erfolgen. Es kann dabei vorgesehen sein, dass über der Länge des Strahlungskollektors (100) eine Mehrzahl von Ventilen (118) mit lokal unterschiedlichen Drosselwirkungen vorgesehen ist. Die Drosselwirkung kann insbesondere in der Haupt-Strömungsrichtung des Solarkollektors, d.h. in dessen Längsrichtung zur Saugvorrichtung hin, ansteigend gewählt sein. Die durch die Ventile (118) erzeugte Drosselwirkung kann zusätzlich zu der durch die Wahl der Perforation erzeugte Drosselwirkung (siehe oben) oder für sich allein vorgesehen sein.

Gemäß einer bevorzugten Ausführungsform kann die äußere Lage (119) der Abdeckung (101) und/oder des Absorbers (102) durch eine Folie mit einer einheitlichen Perforation, d.h. mit einheitlicher Lochungsgröße und einheitlichem Lochabstand, gebildet sein. Die Erzeugung der Drosselwirkung kann dann allein durch die Ventile (118), insbesondere durch die innere Lage (120) und die dort eingebrachten Ventillappen (139) erzeugt werden. Es kann auch vorgesehen sein, dass an manchen Öffnungen der Perforation (105, 106) eine vollständig dichtende und permanente Abdeckung durch die innere Lage (120) vorgesehen wird (maximale Drosselung), während bei anderen Öffnungen auch eine vollständige Öffnung in der inneren Lage (120) vorgesehen ist (minimale Drosselung).

Ferner kann durch die Wahl der Größe und der Lage eines Ventillappens (139) in Relation zu der Öffnung einer Perforation (105,106) die lokale Drosselwirkung weitreichend eingestellt werden.

In Figur 7 sind beispielhaft zwei Ventilformen (140, 141) gegenübergestellt. Bei der ersten Ventilform (140) ist ein Ventillappen (139) vorgesehen, der flächenmäßig größer ist als die zugehörige Öffnung der Perforation (105,106). Ein solcher Ventillappen (139) kann durch eine Trennstelle (122) (Schnittlinie) erzeugt werden, die eine Öffnung der Perforation (105, 106) an drei Seiten vollständig umgreift, sodass die Ansatzlinie (142) des Ventillappens (139) außerhalb der Öffnung liegt.

In der rechten Darstellung von Figur 7 ist zum Vergleich eine zweite Ventilform (141) gezeigt. Bei dieser ist ein kleinformatiger Ventillappen (139') durch eine Trennstelle (122) erzeugt, die eine Öffnung der Perforation (105, 106) an zwei Seiten nur teilweise umgibt, so dass die Ansatzlinie (142') dieses Ventillappens (139') die Öffnung kreuzt. Wenn dieser Ventillappen (139') geöffnet wird, gibt er nur den Teil (143) der Öffnung der Perforation (105,106) frei, der sich unterhalb der Ansatzlinie (142') befindet. Hierdurch wird der effektive Querschnitt der Öffnung, durch den eine Gasströmung (133, 134) stattfinden kann, auf den freien Teil (143) verkleinert und somit eine Drosselwirkung erzeugt.

Die Ausprägung der Drosselwirkung kann durch die Größe und relative Lage eines Drossellappens (139, 139') in Bezug auf die Größe und Lage einer oder mehrerer zu überdeckender Öffnungen der Perforation (105, 106) eingestellt werden.

Gemäß einer bevorzugten Ausführung der Erfindung können an der Abdeckung (101) mehrere Ventile (118) gemäß der ersten Ventilform (140) angeordnet sein, welche im Wesentlichen nur eine Beschränkung der Durchflussrichtung für eine Gasströmung (133) durch die Abdeckung (101) bewirken. An dem Absorber (102) können hingegen mehrere Ventile (118) mit unterschiedlichen Ventilformen (140, 141) angeordnet sein, die die vorgenannte Erhöhung der lokalen Drosselwirkung entlang der Strömungsrichtung erzeugen. Alternativ können andere Ventilformen und/oder andere Kombinationen von Perforationen (105, 106) und Ventilformen (140,141) vorgesehen sein.

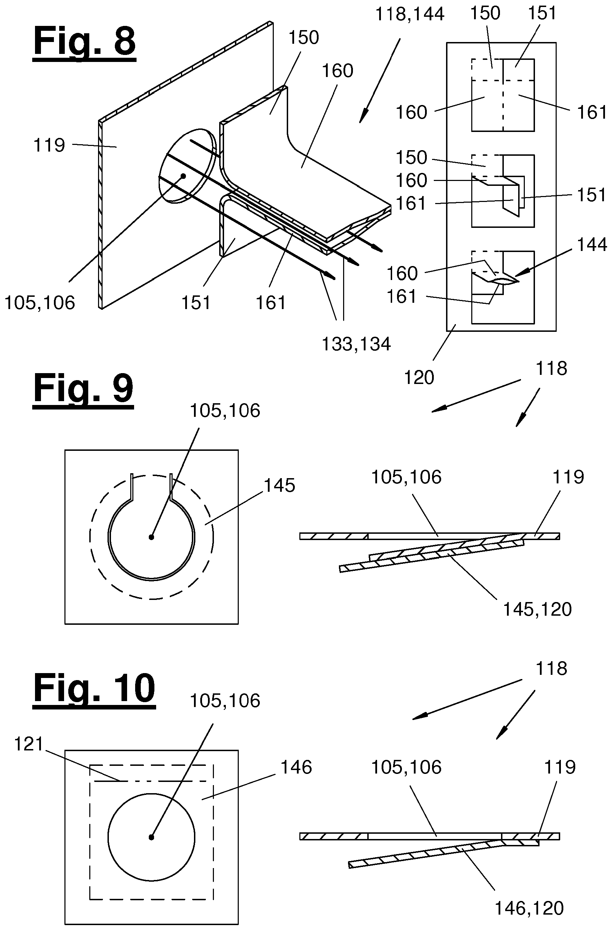

Gemäß einer weiteren bevorzugten Ausführungsform kann ein aus zwei Folienlagen (119, 120) bestehendes Ventil durch einen Ventilrüssel (144) gebildet sein, der ein zur Innenseite des Solarkollektors (100) weisendes freies Ende aufweist. Ein solcher Ventilrüssel (144) ist im linken Teil von Figur 8 im Halbschnitt dargestellt. Der Rüssel (144) umfasst zwei Ansatzläppchen (150,151) und ein Schlauchstück, das aus einem flachen oberen Teil (160) und einem flachen unteren Teil (161) besteht, die randseitig miteinander verbunden sind. Der Ventilrüssel (144) gemäß Figur 8 kann aus einem einzigen Materialstück gefertigt sein. Dies ist im rechten Teil von Figur 8 anhand eines Schnitt- und Faltplans erläutert. Aus dem rechten Teil von Figur 8 geht ferner hervor, dass eine Vielzahl von Ventilrüsseln (144) in einer durchgehenden Materialbahn (120) erzeugt werden kann, wobei deren Verteilung bevorzugt an das Muster einer Perforation (105,106) angepasst ist, sodass jeweils ein Ventilrüssel (144) über einer Öffnung der Perforation (105,106) zu liegen kommt. Durch die Länge und/oder Breite des oberen und unteren Teils (160, 161) des Schlauchstücks kann die Drosselwirkung des Rüsselventils (144) beeinflusst werden.

Figuren 9 und 10 zeigen weitere Varianten für ein Ventil (118). In Figur 9 wird in der äußeren Lage (119) zur Bildung einer Öffnung der Perforation (105, 106) ein Läppchen ausgeschnitten, an das innenseitig ein etwas größerer und bevorzugt etwas steiferer Ventillappen (145) befestigt wird. Der innere Ventillappen kann als separates Materialstück vorliegen oder ebenfalls als ein ausgeschnittener Lappen in der inneren Lage (120). Bei dem Ventil in Figur 10 ist ein Ventillappen (146) durch ein separates Materialstück gebildet, das durch eine einzelne Verbindungsstelle (121) an der äußeren Lage (119) befestigt ist.

Die Funktion der Ventile gemäß Figuren 9 und 10 stimmt im Übrigen mit den Ventilformen gemäß Figuren 6 und 7 überein.

Ein Solarkollektor (100) kann sehr unterschiedlichen Umweltbedingungen ausgesetzt sein. Er kann je nach Einsatzort und Einsatzzeit starken Winden, Hagelschlag, Schneefall, Starkregen oder Partikelverwehungen ausgesetzt sein. Die Wahl des Materials und der Struktur der Abdeckung und des Absorbers können bevorzugt auf die zu erwartenden Umweltbedingungen angepasst sein. Entsprechend können verschiedene Materialdicken und ggf. Materialverstärkungen durch eingebettete oder zusätzlich aufgebrachte Verstärkungsfasern vorgesehen sein.

An dem Traggestell (107) und insbesondere an den Modulelementen (108, 109, 110, 111) können Beschwerungen, beispielsweise in Form von Gewichten (125), zur Erhöhung der Standfestigkeit vorgesehen sein. Dies ist insbesondere dann sinnvoll, wenn das Traggestell (107) nicht fest mit dem Untergrund verbunden werden kann. In Figur 2 ist beispielhaft dargestellt, dass zwischen den Standfüßen (112) zweier benachbarter Modulelemente bzw. Startelemente (128, 108, 109) Gewichte (125) angeordnet sind, die die Standfestigkeit eines jeweils zugeordneten Teiles des Strahlungskollektors (100) sichern.

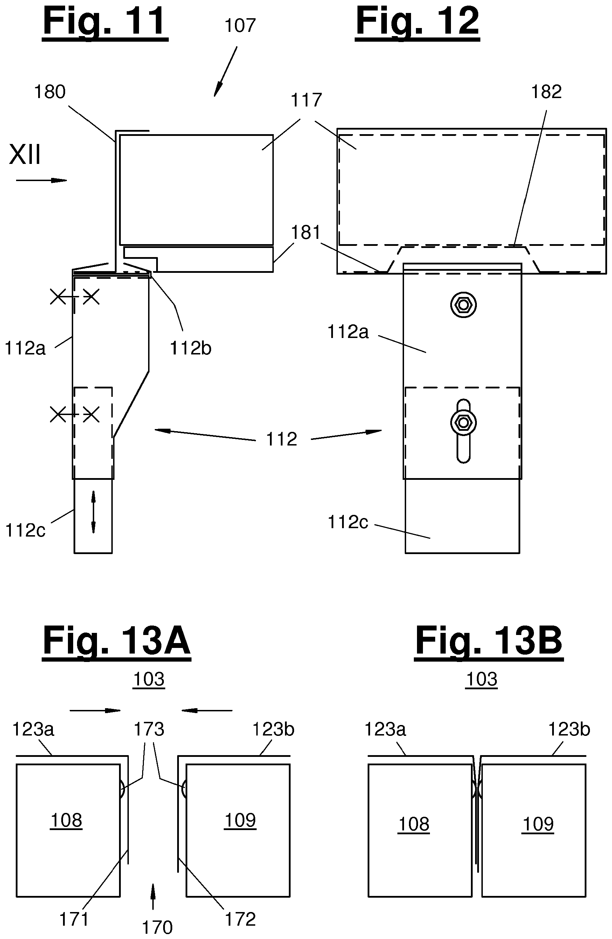

Figuren 11 und 12 zeigen eine bevorzugte Ausführungsvariante eines Traggestells (107). Figur 11 stellt einen Querschnitt in der Haupt-Strömungsrichtung dar und Figur 12 ist eine Seitenansicht gemäß Sichtrichtung XII in Figur 11. Das Traggestell (107) weist in dem Beispiel eine Rahmen-Profilseite (180) auf, die bspw. die Längsseiten eines Modulelements (108, 109, 110, 111) bildet. In dem Beispiel ist die Rahmen-Profilseite (180) durch ein mehrfach abgekantetes Blech gebildet. Das obere Ende der Rahmen-Profilseite (180) ist nach innen hin umgefalzt und bildet eine steife Auflagekante, an der bspw. die Bodenfolie (123), der Absorber (102) und die transparente Abdeckung (101) angelegt werden können. Ferner kann unter diesem abgekanteten Ende eine thermische Isolierung (117) gehalten sein, bspw. in Form einer mehrteilig einsetzbaren Wärmedämmplatte. Das untere Ende ist Z-förmig gefalzt und dient als Verbindungsstelle zu einem oder mehreren Standfüßen (112) sowie einem Bodenblech (180). In dem Bodenblech (181) sind Versteifungsrippen, bspw. in Form von Trapez-Sicken (182) eingearbeitet, an denen ferner die Isolierung (117) befestigbar ist. Das Bodenblech (181) kann mit den Rahmen-Profilseiten (180) auf beliebige Weise verbunden sein, bspw. durch Nieten, Schweißen oder Kleben. Alternativ kann das Bodenblech lediglich zwischen zwei Rahmen-Profilseiten (180) eingelegt und durch die darüber angeordnete Isolierung (117) geklemmt werden.

Die Standfüße (112) können auf beliebige Weise befestigt sein. In dem Beispiel von Figuren 11 und 12 werden die Füße (112) durch Klemmen befestigt. Sie sind aus umgefalzten Blechen hergestellt, die eine Vorderwand (112a) einen Klemm-Riegel (112b) und einen Bodenaufleger (112c) bilden. Die Vorderwand (112a) wird von außen an eine Rahmen-Profilseite (180) angelegt, wobei ein oberer Falz der Vorderwand den nach außen überstehenden Teil der Unterkante der Rahmen-Profilseite (180) umgreift. Der Klemm-Riegel (112b) wird von innen angesetzt und umgreift das innere Ende der Unterkante der Rahmen-Profilseite (180). Der Klemm-Riegel (112c) wird mit der Vorderwand (112a) verschraubt, sodass der Fuß (112) frei entlang der Rahmen-Profilseite (180) positionierbar und durch Klemmen fixierbar ist. Der Bodenaufleger (112c) wird in die Vorderwand (112a) eingesetzt und mittels einer Schraube in einem Langloch befestigt und auf die gewünschte Höhe eingestellt. Vorderwand (112a) und Bodenaufleger (112c) können als U-Profile ausgebildet sein, deren seitliche Wandungen eine Teleskopführung bilden.

Figur 13A und 13B zeigen bevorzugte Ausführung einer Bodenfolie (123) zur Verwendung mit einem Traggerüst in Modulbauweise. In dem gezeigten Beispiel erstreckt sich die Bodenfolie (123) nicht über die gesamte Länge des Solarkollektors (100) sondern es sind mehrere separate Bodenfolien (123a, 123b) vorgesehen, die jeweils ein oder mehrere Modulelemente (108, 109, 110, 111) überdecken und somit abschnittweise eine untere Begrenzung des inneren Strömungskanals (103) bilden, die bevorzugt gasdicht ausgeführt ist.

An den Stirnseiten eines oder beider benachbarten Modulelemente (108, 109) können Dichtmittel bspw. in Form flexibler Dichtlippen (173) vorgesehen sein, über denen die Enden (171, 172) frei hängen oder gespannt sind. Ein Längsende (171, 172) der Bodenfolie (123a, 123b) ist also über den Rand eines Modulelements (108, 109) hinaus verlängert und in die Stoßstelle (170) zwischen den Modulelementen (108, 109) eingezogen. Bei der Installation des Kollektors (100) werden die Modulelemente (108, 109) aneinander angelegt und miteinander verbunden, wobei die Enden (171, 172) der Bodenfolien (123a, 123b) an der Stoßstelle (170) gegeneinander gedrückt und dichtend miteinander verbunden werden. Die flexiblen Dichtlippen (173) werden dabei verformt und gewährleisten eine ausreichende Dichtwirkung, selbst wenn die Modulelemente (108, 109) zueinander verkippt sind oder einen leichten Höhenunterschied zueinander aufweisen. Bevorzugt kann für jedes Modulelement (108, 109, 110, 111) eine separate Bodenfolie (123a, 123b) vorgesehen sein, die bereits im Werk angebracht wird. Für die Installation des Kollektors müssen dann nur noch der Absorber (102) und die transparente Abdeckung (101) angebracht werden.

Abwandlungen der Erfindung sind in verschiedener Weise möglich.

Insbesondere können die zu den einzelnen Ausführungsbeispielen beschriebenen oder gezeigten Merkmale in beliebiger Weise miteinander kombiniert, gegeneinander ersetzt, ergänzt oder weggelassen werden. Die in Strömungsrichtung hintere Endseite (127) des Strahlungskollektors (100) kann auch durch einen endseitigen Fortsatz der Abdeckung (101) und/oder des Absorbers (102) gebildet sein, der mit der Endkante des Traggestells (107) verbunden wird.

Das Traggestell (107) kann ohne Füße (112) ausgebildet und zur Direktmontage auf einem bevorzugt flachen Untergrund vorgesehen sein, beispielweise auf einem Flachdach. Es kann zur Befestigung weiterer Elemente dienen. Beispielsweise kann ein Solarkollektor (100) auf einem Hausdach angeordnet sein und es können an dem Traggestell (107) Sicherungselemente wie Ösen oder Haken vorgesehen sein, an denen eine Absturzsicherung für Fensterputzer etc. oder eine Schneefangsicherung befestigbar ist.

### BEZUGSZEICHENLISTE

- 100: Strahlungskollektor / Solarkollektor
- 101: Abdeckung / erste flexible Materialbahn / Folie
- 102: Absorber / zweite flexible Materialbahn / Folie
- 103: Innerer Strömungskanal
- 104: Kammer / äußerer Strömungskanal
- 105: Perforation / Lochung (innen)
- 106: Perforation / Lochung (außen)
- 107: Traggestell
- 108: Modulelement
- 109: Modulelement
- 110: Modulelement
- 111: Modulelement
- 112: Fuß
- 112a: Vorderwand
- 112b: Klemm-Riegel
- 112c: Bodenaufleger
- 113: Höhenverstellung
- 114: Tragbogen
- 114': Tragbogen für Anwendung mit Schneelast
- 115: Öse
- 116: Abhänger
- 117: Thermische Isolierung
- 118: Ventile / Ventilanordnung Luv-seitig
- 118': Ventile / Ventilanordnung Lee-seitig
- 119: Äußere Lage (Absorber o. Abdeckung)
- 120: Innere Lage (Ventil-Folie)
- 121: Verbindungsstelle / Schweißnaht
- 122: Schnitt / Trennstelle
- 123: Bodenfolie / dritte flexible Materialbahn / Folie
- 123a: Bodenfolie
- 123b: Bodenfolie
- 124: Saugvorrichtung / Ventilator
- 125: Beschwerung / Gewichte
- 126: Vordere Endseite / Frontwand
- 127: Hintere Endseite / Rückwand
- 128: Startelement
- 129: Abschlusselement
- 130: Boden / Untergrund
- 131: Einlass-Strömung
- 132: Auslass-Strömung
- 133: Gasströmung / Luft-Zustrom von außen
- 134: Gasströmung / Absorber-Durchtrittstrom
- 135: Klappe / Öffnung für Einlass-Strömung
- 136: Zirkulation
- 137: Giebelkrümmung
- 138: Wind
- 139: Ventillappen
- 140: Erste Ventilform
- 141: Zweite Ventilform
- 142: Ansatzlinie
- 143: Überdeckung
- 144: Ventilrüssel
- 145: Ventillappen steif / Ventilplatte
- 146: Ventillappen separat fixiert
- 150: Ansatzläppchen
- 151: Ansatzläppchen
- 160: Schlauchstück, flacher oberer Teil
- 161: Schlauchstück, flacher unterer Teil
- 170: Stoßstelle
- 171: Längs-Ende einer Bodenfolie
- 172: Längs-Ende einer Bodenfolie
- 173: Dichtlippe
- 180: Rahmen-Profilseite
- 181: Bodenblech
- 182: Trapez-Sicke

## Patentansprüche

1. Strahlungskollektor zum Erwärmen eines Gases mit Lichtenergie, wobei der Strahlungskollektor (100) unterschiedlichen Wetterbedingungen wie Winden, Hagelschlag, Schneefall oder Regen ausgesetzt sein kann und einen inneren Strömungskanal (103) aufweist, der zur Einstrahlungsseite hin durch einen Absorber (102) begrenzt ist, sowie einen den inneren Strömungskanal (103) zumindest teilweise umgebenden äußeren Strömungskanal (104), der zur Einstrahlungsseite hin durch eine transparente Abdeckung (101) begrenzt ist, und wobei die transparente Abdeckung (101) durch eine flexible und dünnschichtige Materialbahn, insbesondere eine transparente Folie gebildet ist, wobei die transparente Abdeckung (101) tunnelförmig aufgespannt ist, **dadurch gekennzeichnet, dass** die transparente Abdeckung (101) eine Perforation (105) aufweist und derart ausgebildet ist, dass frische Luft vom Außenbereich her durch die Abdeckung (101) in den äußeren Strömungskanal fließen kann, und dass der Absorber (102) luftdurchlässig ist und eine Perforation (106) aufweist, wobei der Absorber (102) durch eine flexible und dünnschichtige Materialbahn gebildet ist, insbesondere durch eine Licht absorbierende Folie und/oder ein Gewebe.

2. Strahlungskollektor nach Anspruch 1, **dadurch gekennzeichnet, dass** der Strahlungskollektor (101) ein Traggestell (107) aufweist, auf dem der Absorber (102) und die Abdeckung (101) befestigt sind, wobei das Traggestell (107) insbesondere aus einer Mehrzahl von Modulelementen (108, 109, 110, 110) zusammensetzbar ist.

3. Strahlungskollektor nach dem vorhergehenden Anspruch, **dadurch gekennzeichnet, dass** sich die transparente Abdeckung (101) und/oder der Absorber (102) über mehrere, insbesondere alle, Modulelemente (108, 109, 110, 111) des Traggestells (107) erstrecken.

4. Strahlungskollektor nach einem der vorhergehenden Ansprüche 2 oder 3, **dadurch gekennzeichnet, dass** das Traggestell (107) eine thermische Isolierung (117), insbesondere eine Isolierplatte, aufweist, die an der von der Lichteinstrahlung abgewandten Seite des Absorbers (102) angeordnet ist.

5. Strahlungskollektor nach einem der vorhergehenden Ansprüche 2 bis 4, **dadurch gekennzeichnet, dass** zwei in Strömungsrichtung aufeinanderfolgende Modulelemente (108, 109, 110, 111) aneinander mit einem Höhenversatz und/oder einer relativen Verkippung anschließen.

6. Strahlungskollektor nach einem der vorhergehenden Ansprüche, **dadurch gekennzeichnet, dass** der innere Strömungskanal (103) an der von der Einstrahlung abgewandten Seite durch eine flexible dünnschichtige Materialbahn (123) begrenzt ist, wobei insbesondere für ein einzelnes oder mehrere aneinander grenzende Modulelemente (108, 109, 110, 11) eine separate flexible dünnschichtige Materialbahn (123) vorgesehen ist, die eine abschnittweise Begrenzung des inneren Strömungskanals (103) bildet.

7. Strahlungskollektor nach einem der vorhergehenden Ansprüche, **dadurch gekennzeichnet, dass** der Absorber (102) und eine Bodenfolie (123) an den Rändern entlang der Strömungsrichtung zu einem Absorber-Schlauch verbunden sind.

8. Strahlungskollektor nach einem der vorhergehenden Ansprüche, **dadurch gekennzeichnet, dass** der Strahlungskollektor zwei oder mehr Tragbögen (114) aufweist, die in Strömungsrichtung zueinander beabstandet angeordnet sind, wobei die Abdeckung (101) durch die Tragbögen (114) gestützt wird, insbesondere durch außenseitige Auflage der Abdeckung auf einem Tragbogen (114), und wobei insbesondere zwischen den Giebelpunkten von zwei benachbarten Tragbögen Seile oder Gurte gespannt sind, auf denen die äußere Abdeckung (101) stützend aufliegt.

9. Strahlungskollektor nach einem der vorhergehenden Ansprüche, **dadurch gekennzeichnet, dass** der Strahlungskollektor zwei oder mehr Tragbögen (114) aufweist, die in Strömungsrichtung zueinander beabstandet angeordnet sind, wobei der Absorber (102) durch die Tragbögen (114) gestützt wird, insbesondere durch außenseitige Auflage auf dem Tragbogen oder durch Befestigung mittels Abhängern (116) .

10. Strahlungskollektor nach einem der vorhergehenden Ansprüche, **dadurch gekennzeichnet, dass** der Strahlungskollektor (100) an einer in Strömungsrichtung gesehen - vorderen Endseite (126) mit einer Saugvorrichtung (124) verbunden ist, und an einer - in Strömungsrichtung gesehen - hinteren Endseite (127) eine oder mehrere Klappen oder Öffnungen (135) aufweist, die insbesondere derart ausgebildet sind, dass eine Einlass-Strömung (131) an Luft von der Außenseite her in den inneren Strömungskanal (103) eindringen kann.

11. Strahlungskollektor nach einem der vorhergehenden Ansprüche, **dadurch gekennzeichnet, dass** der Strahlungskollektor an einer in Strömungsrichtung gesehen - vorderen Endseite (126) mit einer Saugvorrichtung (124) verbunden ist, und dass die Perforationen (105, 106) am Absorber (102) und/oder an der transparenten Abdeckung (101) so gewählt sind, dass über der Gesamtoberfläche des Absorbers (102) und/oder der Abdeckung (101) eine Drosselung der lokalen Gasströmungen (134) in einem solchen Maße erfolgt, dass sich ein am vorderen Ende (126) erzeugtes Druckgefälle auch noch am rückseitigen Ende (127) auswirkt, wobei die Drosselwirkung der Perforation (105, 106) insbesondere über der Länge des Strahlungskollektors (100) lokal unterschiedlich ausgebildet ist.

12. Strahlungskollektor nach einem der vorhergehenden Ansprüche, **dadurch gekennzeichnet, dass** an der Abdeckung (101) ein oder mehrere Ventile (118) angeordnet sind, die zur Beschränkung einer GasStrömung (133) zwischen dem Außenraum und dem äußeren Strömungskanal (104) dienen und/oder dass an dem Absorber (102) ein oder mehrere Ventile (118) angeordnet sind, die zur Beschränkung einer Gasströmung (134) zwischen dem äußeren Strömungskanal (104) und dem inneren Strömungskanal (103) dienen.

13. Strahlungskollektor nach dem vorhergehenden Anspruch, **dadurch gekennzeichnet, dass** über der Länge des Strahlungskollektors (100) eine Mehrzahl von Ventilen (118) mit unterschiedlichen Drosselwirkungen angeordnet ist, wobei insbesondere die Drosselwirkung der Ventile (118) in Strömungsrichtung ansteigend gewählt ist.

14. Heizsystem mit einem Strahlungskollektor (100) und einer Gasfördervorrichtung (124), dadurch **gekennzeich**n**et,** dass der Strahlungskollektor nach einem der vorhergehenden Ansprüche ausgebildet ist.

15. Trocknungsanlage mit einem Strahlungskollektor (100) und einer Gasfördervorrichtung (124), **dadurch gekennzeichnet, dass** der Strahlungskollektor nach einem der vorhergehenden Ansprüche ausgebildet ist.

## Claims

1. Radiation collector for heating a gas with light energy, wherein the radiation collector (100) can be exposed to different weather conditions such as winds, hail, snowfall or rain and has an inner flow channel (103) which is delimited towards the irradiation side by an absorber (102), and also an outer flow channel (104) which at least partially surrounds the inner flow channel (103) and which is delimited towards the irradiation side by a transparent covering (101), and wherein the transparent covering (101) is formed by a flexible and thin-layer material web, in particular a transparent film, wherein the transparent covering (101) is spread out in a tunnel-shaped manner, **characterized in that** the transparent covering (101) has a perforation (105) and is configured in such a way that fresh air can flow from the exterior through the covering (101) into the outer flow channel, and **in that** the absorber (102) is permeable to air and has a perforation (106), wherein the absorber (102) is formed by a flexible and thin-layer material web, in particular by a light-absorbing film and/or a woven fabric.

2. Radiation collector according to Claim 1, **characterized in that** the radiation collector (101) has a supporting frame (107) on which the absorber (102) and the covering (101) are fastened, wherein the supporting frame (107) can be assembled in particular from a plurality of module elements (108, 109, 110, 110).

3. Radiation collector according to the preceding claim, **characterized in that** the transparent covering (101) and/or the absorber (102) extend/extends over a plurality, in particular all, of the module elements (108, 109, 110, 111) of the supporting frame (107).

4. Radiation collector according to either of the preceding Claims 2 and 3, **characterized in that** the supporting frame (107) has a thermal insulation (117), in particular an insulating plate, which is arranged on that side of the absorber (102) which faces away from the light irradiation.

5. Radiation collector according to one of the preceding Claims 2 to 4, **characterized in that** two module elements (108, 109, 110, 111) which are consecutive in the flow direction adjoin one another with a height offset and/or a relative tilt.

6. Radiation collector according to one of the preceding claims, **characterized in that** the inner flow channel (103) is delimited on the side facing away from the irradiation by a flexible, thin-layer material web (123), wherein in particular a separate flexible, thin-layer material web (123) is provided for an individual module element or several adjoining module elements (108, 109, 110, 11), said material web forming a delimitation of certain portions of the inner flow channel (103).

7. Radiation collector according to one of the preceding claims, **characterized in that** the absorber (102) and a bottom film (123) are connected at the edges along the flow direction to form an absorber hose.

8. Radiation collector according to one of the preceding claims, **characterized in that** the radiation collector has two or more supporting arches (114) which are arranged spaced apart from one another in the flow direction, wherein the covering (101) is supported by the supporting arches (114), in particular by external support of the covering on a supporting arch (114), and wherein in particular ropes or belts are stretched between the gable points of two adjacent supporting arches, the outer covering (101) resting on said ropes or belts in a supporting manner.

9. Radiation collector according to one of the preceding claims, **characterized in that** the radiation collector has two or more supporting arches (114) which are arranged spaced apart from one another in the flow direction, wherein the absorber (102) is supported by the supporting arches (114), in particular by external support on the supporting arch or by fastening by means of suspending devices (116).

10. Radiation collector according to one of the preceding claims, **characterized in that** the radiation collector (100) is connected on a front end side (126) - as seen in the flow direction - to a suction apparatus (124), and has on a rear end side (127) - as seen in the flow direction - one or more flaps or openings (135) which are configured in particular in such a way that an inlet flow (131) of air can penetrate from the exterior into the inner flow channel (103).

11. Radiation collector according to one of the preceding claims, **characterized in that** the radiation collector is connected on a front end side (126) - as seen in the flow direction - to a suction apparatus (124), and **in that** the perforations (105, 106) on the absorber (102) and/or on the transparent covering (101) are selected such that throttling of the local gas flows (134) over the total surface of the absorber (102) and/or of the covering (101) is effected to such an extent that a pressure drop generated at the front end (126) also has an effect at the rear end (127), wherein the throttling action of the perforation (105, 106) is configured locally differently in particular over the length of the radiation collector (100).

12. Radiation collector according to one of the preceding claims, **characterized in that** one or more valves (118) are arranged on the covering (101), said valves serving to limit a gas flow (133) between the exterior space and the outer flow channel (104), and/or in that one or more valves (118) are arranged on the absorber (102), said valves serving to limit a gas flow (134) between the outer flow channel (104) and the inner flow channel (103).

13. Radiation collector according to the preceding claim, **characterized in that** a plurality of valves (118) with different throttling actions are arranged over the length of the radiation collector (100), wherein in particular the throttling action of the valves (118) is selected so as to increase in the flow direction.

14. Heating system having a radiation collector (100) and a gas-conveying apparatus (124), **characterized in that** the radiation collector is configured according to one of the preceding claims.

15. Drying installation having a radiation collector (100) and a gas-conveying apparatus (124), **characterized in that** the radiation collector is configured according to one of the preceding claims.

## Revendications

1. Collecteur de rayonnement destiné à chauffer un gaz avec de l'énergie lumineuse, le collecteur de rayonnement (100) pouvant être exposé à différentes conditions météorologiques telles que vents, grêle, neige ou pluie et comportant un canal d'écoulement intérieur (103) qui est délimité du côté irradiation par un absorbeur (102), un canal d'écoulement extérieur (104) qui entoure au moins partiellement le canal d'écoulement intérieur (103) et qui est délimité du côté irradiation par un capot transparent (101), et le capot transparent (101) étant formé par une bande de matière souple à couche mince, en particulier un film transparent, le capot transparent (101) étant tendu en forme de tunnel, **caractérisé en ce que** le capot transparent (101) comporte une perforation (105) et est conçu de telle sorte que de l'air frais puisse s'écouler de l'extérieur à travers le capot (101) jusque dans le canal d'écoulement extérieur, et **en ce que** l'absorbeur (102) est perméable à l'air et comporte une perforation (106), l'absorbeur (102) étant formé par une bande de matière souple à couche mince, notamment par un film absorbant la lumière et/ou un tissu.

2. Collecteur de rayonnement selon la revendication 1, **caractérisé en ce que** le collecteur de rayonnement (101) comporte un cadre de support (107) sur lequel l'absorbeur (102) et le capot (101) sont fixés, le cadre de support (107) pouvant notamment être assemblé à partir d'une pluralité d'éléments modulaires (108, 109, 110, 110).

3. Collecteur de rayonnement selon la revendication précédente, **caractérisé en ce que** le capot transparent (101) et/ou l'absorbeur (102) s'étendent sur une pluralité, notamment la totalité, des éléments modulaires (108, 109, 110, 111) du cadre de support (107) .

4. Collecteur de rayonnement selon l'une des revendications précédentes 2 ou 3, **caractérisé en ce que** le cadre de support (107) comporte une isolation thermique (117), en particulier une plaque isolante, qui est disposée du côté de l'absorbeur (102) qui est opposé à l'irradiation lumineuse.

5. Collecteur de rayonnement selon l'une des revendications précédentes 2 à 4, **caractérisé en ce que** deux éléments modulaires successifs (108, 109, 110, 111) dans le sens d'écoulement sont adjacents avec un décalage en hauteur et/ou une inclinaison relative.

6. Collecteur de rayonnement selon l'une des revendications précédentes, **caractérisé en ce que** le canal d'écoulement intérieur (103) est délimité du côté opposé à l'irradiation par une bande de matière souple à couche mince (123), une bande de matière souple à couche mince séparée (123) étant prévue en particulier pour un seul ou plusieurs éléments modulaires adjacents (108, 109, 110, 11), laquelle bande de matière forme une délimitation par portions du canal d'écoulement intérieur (103).

7. Collecteur de rayonnement selon l'une des revendications précédentes, **caractérisé en ce que** l'absorbeur (102) et un film inférieur (123) sont reliés sur les bords dans le sens d'écoulement pour former un tuyau absorbeur.

8. Collecteur de rayonnement selon l'une des revendications précédentes, **caractérisé en ce que** le collecteur de rayonnement comporte deux arceaux de support (114) ou plus qui sont disposés à distance les uns des autres dans le sens d'écoulement, le capot (101) étant supporté par les arceaux de support (114), notamment par appui côté extérieur du capot sur un arceau de support (114), et en particulier des câbles ou des sangles, sur lesquels le capot extérieur (101) est en appui de soutien, étant tendus entre les sommets de deux arceaux de support adjacents.

9. Collecteur de rayonnement selon l'une des revendications précédentes, **caractérisé en ce que** le collecteur de rayonnement comporte deux arceaux de support (114) ou plus qui sont disposés à distance les uns des autres dans le sens d'écoulement, l'absorbeur (102) étant supporté par les arceaux de support (114), notamment par appui côté extérieur sur l'arceau de support ou par fixation au moyen de suspentes (116).

10. Collecteur de rayonnement selon l'une des revendications précédentes, **caractérisé en ce que** le collecteur de rayonnement (100) est relié à un dispositif d'aspiration (124) sur un côté d'extrémité avant (126), vu dans le sens d'écoulement, et comporte sur un côté d'extrémité arrière (127), vu dans le sens d'écoulement, un ou plusieurs volets ou ouvertures (135) qui sont conçus en particulier de telle sorte qu'un écoulement d'entrée (131) d'air puisse pénétrer dans le canal d'écoulement intérieur (103) depuis le côté extérieur.

11. Collecteur de rayonnement selon l'une des revendications précédentes, **caractérisé en ce que** le collecteur de rayonnement est relié à un dispositif d'aspiration (124) sur un côté d'extrémité avant (126), vu dans le sens d'écoulement, et **en ce que** les perforations (105, 106) au niveau de l'absorbeur (102) et/ou du capot transparent (101) sont choisies de telle sorte que les écoulements de gaz locaux (134) soient étranglés sur toute la surface de l'absorbeur (102) et/ou du capot (101) à tel point que des chutes de pression générées à l'extrémité avant (126) affectent également l'extrémité arrière (127), l'action d'étranglement de la perforation (105, 106) étant prévue pour être localement différente, notamment sur la longueur du collecteur de rayonnement (100).

12. Collecteur de rayonnement selon l'une des revendications précédentes, **caractérisé en ce qu'**une ou plusieurs vannes (118) sont disposées au niveau du capot (101) et servent à restreindre un écoulement de gaz (133) entre l'espace extérieur et le canal d'écoulement extérieur (104) et/ou **en ce qu'**une ou plusieurs vannes (118) sont disposées au niveau de l'absorbeur (102), lesquelles vannes servent à restreindre un écoulement de gaz (134) entre le canal d'écoulement extérieur (104) et le canal d'écoulement intérieur (103).

13. Collecteur de rayonnement selon la revendication précédente, **caractérisé en ce que** plusieurs vannes (118) à actions d'étranglement différentes sont disposées sur la longueur du collecteur de rayonnement (100), en particulier l'action d'étranglement des vannes (118) étant choisie de manière à augmenter dans le sens de l'écoulement.

14. Système de chauffage muni d'un collecteur de rayonnement (100) et d'un dispositif de transport de gaz (124), **caractérisé en ce que** le collecteur de rayonnement est conçu selon l'une des revendications précédentes.

15. Système de séchage muni d'un collecteur de rayonnement (100) et d'un dispositif de transport de gaz (124), **caractérisé en ce que** le collecteur de rayonnement est conçu selon l'une des revendications précédentes.
